# EUROPEAN PATENT SPECIFICATION

(11) **EP 2 303 566 B1**
(45) Date of publication and mention of the grant of the patent: **29.01.2014**
(21) Application number: 09753940.7
(22) Date of filing: 28.05.2009
(51) Int. Cl.: B31B 39/00, B32B 27/32, B32B 27/36, B65D 30/08, B65D 65/40

(54) **A METHOD OF MANUFACTURING A BAG AND A BAG**
VERFAHREN ZUR HERSTELLUNG EINES BEUTELS UND BEUTEL
PROCÉDÉ DE FABRICATION D'UN SAC ET SAC

(30) Priority: 29.05.2008 EP 08157216; 16.01.2009 EP 09150792
(43) Date of publication of application: 06.04.2011
(73) Proprietor: SMQ Group B.V., 3632 EM Loenen aan de Vecht (NL)
(72) Inventor: DE MUINCK, Ebo Jacques, NL-3632 EM Loenen a/d Vecht (NL)
(74) Representative: De Vries & Metman
(86) International application number: PCT/EP2009/056567
(87) International publication number: WO 2009/144285

(56) References cited:
- EP-A- 0 937 651
- EP-A- 1 182 142
- EP-A- 1 685 954
- WO-A-00/07817
- WO-A-97/40981
- FR-A- 2 704 480
- US-A- 4 818 592
- US-A- 5 154 789
- US-A1- 2007 047 852

## Description

The present invention relates to a method of manufacturing a bag for containing a liquid.

Manufacturing a bag for containing a liquid is known in the art. In practice, particularly plastic bags have a wall which often comprises at least two layers of different properties so as to achieve a compromise of bag properties, such as liquid permeability, flexibility, strength and the like. For certain combinations of layers a manufacturing method is not available or complex.

The present invention aims to provide an improved method of manufacturing a bag.

For this purpose the method of manufacturing a bag is performed by supplying at least two sheets, each sheet comprising at least an inner layer made of an inner layer material and an outer layer made of an outer layer material, the inner layer material having a higher melting temperature than the outer layer material, wherein the outer layers of the sheets are laid onto each other and welded to each other along a welding seam such that an almost entirely sealed cavity between the sheets arises, but leaving open an entrance opening to the cavity, after which the thus formed bag is turned inside out through the entrance opening, and then a portion of the sheets around the entrance opening is folded inwardly of the thus formed bag such that the outer layers thereof face to each other and are then welded to each other such that the bag obtains a sealed cavity between the sheets.

The advantage of this method is that a bag is obtained which has an inner layer contacting the content of the bag and having a higher melting temperature than the outer layer which is disposed at a side of the inner layer opposite to that of the inner side of the bag. This makes it possible to manufacture a bag by welding technique whereas the bag has wall layers of non-conventional combinations of materials. This broadens the number of applicable combinations.

For example, the outer layer material may be polyethylene (PE) and the inner layer material may be polyethylene terephtalate (PET). PET has a higher melting temperature than PE. When welding two sheets, which each comprise a PET layer and a PE layer, and welding the PET layers to each other the PE layer may be damaged due to the relatively high melting temperature of PET. When welding the PE layers of the sheets to each other the PET layers will not be damaged due to the relatively low melting temperature of PE. However, from point of manufacturing efficiency it is desired to be able to manufacture a bag having welded seals and a PET layer as inner layer. The advantage of a bag having PE as outer layer and PET as inner layer is that, when the bag is filled with a liquid, the inner layer contacts the liquid, but has relatively little influence on the taste of the liquid, since PE has a high tendency to modify the taste of the liquid, but PET has not. For example, because of the neutral taste of water it is very sensitive to a little change in taste, for example due to storage of water in a bag having a PE inner layer. This may be caused by chemical compounds such as plasticizers or additives present in PE and migrating to water upon contact therewith. Furthermore, the method according to the invention is also suitable for manufacturing bags which have alternative inner and outer layers, for example an inner layer which is acid resistant such that acids can be transported in bags. It is noted that welding can be done according to a conventional method, for example by clamping the sheets between heated welding bars.

It is noted that the at least two sheets are not necessarily two separate sheets. It is possible, for example, that the two sheets are supplied by folding a single main sheet comprising an inner layer and outer layer. After folding the single main sheet, again two sheets are supplied each having an inner layer and an outer layer.

A further advantage of PET as an inner layer and PE as an outer layer is that PET functions as a barrier layer, and that the permeability of a bag wall having a barrier layer as an inner layer is lower compared to a bag wall of which the outer layer is a barrier layer. In other words the permeability is relatively low when the barrier layer is in direct contact with the content of the bag. This means that the barrier layer, or in practice the PET layer, may be relatively thin in order to achieve a similar permeability as a bag wall having the barrier layer applied as an outer layer.

In an alternative method a bag is manufactured by supplying at least two sheets, each comprising at least an inner layer made of an inner layer material and an outer layer made of an outer layer material, the inner layer material having a higher melting temperature than the outer layer material, wherein the outer layers of the sheets are laid onto each other and welded to each other along a welding seam such that an almost entirely sealed cavity between the sheets arises, but leaving open an entrance opening to the cavity, and wherein the inner and outer layers of the sheets at the entrance opening are manufactured such that the outer layers extend beyond outer edges of the respective inner layers as seen in outward direction of the sheets, wherein the thus formed bag is turned inside out through the entrance opening, and then said portions of the outer layer extending beyond the inner layer are welded to each other. In this case the outer layers at the entrance opening face to each other and can be welded to each other rather easily. Thus, the inner layers are not or not entirely present between the welded portions of the outer layers. It does not matter at what stage in the method the inner and outer layer are manufactured such that the outer layer extends beyond the inner layer, as long as it is performed before welding the outer layers to each other.

In another alternative method the bag is manufactured by supplying at least two sheets, each sheet comprising at least an inner layer made of an inner layer material and an outer layer made of an outer layer material, the inner layer material having a higher melting temperature than the outer layer material, wherein the inner layers of the sheets are laid onto each other, and wherein the inner layer and outer layer are prepared such that the inner layer is away at a location where a welding seam of the sheets is intended, and the outer layers are welded to each other at the location where a welding seam is intended. In this case the inner layers may extend up to the welding seam such that a contact of the content of the bag with the outer layer is minimized. However, little contact between the outer layer and the content of the bag may be acceptable. It is noted that at the location where the inner layer is away, the inner layer is not laminated or adhered to the outer layer or removed from the outer layer or the like. It is also possible that the inner layer and outer layer are not fixed to each other and that the surface of the inner layer is just smaller than the surface of the outer layer.

The welding seam may be circumferentially shaped such that a sealed cavity arises between said sheets.

In still another alternative method the sheets are supplied and laid onto each other by supplying a main sheet being continuous in a transfer direction and having longitudinal welding portions spaced from each other in a direction perpendicular to the transfer direction, in which welding portions the inner layer is away, and folding and cutting the main sheet such that the inner layer of the main sheet and the welding portions are laid onto themselves, and the outer layer at the welding portions face to each other, and the outer layer at the welding portions are welded to each other, thus forming a cavity surrounded by sheets comprising welded welding portions and a fold, the thus formed bag leaving open an entrance opening to the cavity, and then a portion of the sheets around the entrance opening is folded inwardly of the thus formed bag such that the outer layers thereof face to each other and are then welded to each other such that the bag obtains a sealed cavity between the sheets. The advantage of this embodiment is that the bag does not need to be turned inside out. Of course, the cavity may still communicate to the environment via a valve opening, for example.

The invention is also related to a bag, which is manufactured by a method as described hereinbefore. The bag may be suitable for containing liquid or alternative substances such as solids.

The invention is also related to a bag having a wall which comprises at least an inner layer facing the inner side of the bag and an outer layer being disposed at a side of the inner layer opposite to the inner side of the bag, wherein the inner layer has a higher melting temperature than the outer layer. Furthermore, the inner layer and/or outer layer may be a polymer. These materials are relatively cheap and can be given a great variety of suitable properties, for example by adding additives to the base materials or modifying the molecule structure. Preferably the inner layer is of polyethylene terephtalate (PET) and/or the outer layer is of polyethylene (PE).

The invention is also related to a bag for containing a liquid having a wall which comprises at least an inner layer facing the inner side of the bag and an outer layer being disposed at a side of the inner layer opposite to the inner side of the bag, which are made of such an inner layer material and an outer layer material, respectively, that upon contact of said materials with content of the bag, migration of chemical compounds contained in the inner layer material thereby influencing the human taste of the content of the bag is lower than that of the outer layer material. Due to these features the conservation of the quality of the content of the bag is improved. Preferably, the inner layer material is polyethylene terephtalate (PET) and/or the outer layer is polyethylene (PE) since these materials have well-known properties and are widely available. As described hereinbefore such a bag can be manufactured according to the method according to the invention. The content of the bag may be a liquid such as water, a powder, solids, any material for the food industry, or the like.

As a consequence of applying an inner layer having a relatively little tendency to influence the taste of water the original taste can be maintained and longer storage periods are possible. In practice, polyethylene terephtalate (PET) appears to have such properties, but making a flexible and strong bag of PET only is not possible. Therefore, a relatively thin layer of PET combined with a relatively thick layer of a more flexible material like polyethylene can be applied, for example by laminating both layers. A difference in the level of human taste between the application of inner layer material and outer layer material may be determined by a panel of test persons. However, for a lot of materials such as polymers like PE and PET, the difference in tendency of influencing the taste of mineral water, for example, contained therein is known. Another way of selecting the inner and outer layer materials is possible by measurement of taste-modifying chemical components in a liquid which is in contact with the inner or outer layer material.

It is noted that the chemical compounds influencing the taste may comprise a plasticizer, but other compounds having taste-influencing properties are conceivable.

In this document polyethylene (PE) and polyethylene terephtalate (PET) are mentioned several times. These material types cover a range of chemical materials having different properties of taste-influencing compounds and melting temperature as defined hereinbefore. Alternative materials for the inner layer are conceivable, such as TFE/TPFE (Teflon™), PPS (Polyphenylene Sulfide), ECTFE (Halar), PA (Polyamide or Nylon), OPA (oriented polyamide), PC (polycarbonate or Lexan), PP (polypropylene), PFA (perfluor-alkoxy-polymers), POM (polyoxymethylene). These materials may have certain characteristics such as anti-adhesive or acid-resistant properties. Because of economical or technical reasons it is not reasonable to manufacture an entire bag of these materials; therefore these materials are used as an inner layer together with an outer layer, such as PE.

The inner layer and the outer layer may be fixed to each other over substantially the entire surfaces thereof. This may be achieved by welding, gluing or alternative adhering means. The layers may also be separated, for example in case of relatively big bags.

In practice, the bag walls will be made of a material which is flexible and liquid impermeable. The inner layer may be thinner and have a higher density than the outer layer. The bag may be entirely sealed having a sealable opening for filling and/or emptying the bag. In a starting condition of the bag, i.e. the bag is empty, it may be vacuum.

In a preferred embodiment of the bag the inner layer and outer layer are dimensioned such that the inner layer is away at a location of a welding seam of the walls, so that the outer layers are welded directly to each other at the location of the welding seam. This means that the walls of the bag are joined appropriately at the welding seam whereas the inner side of the bag is formed by an inner layer of a relatively high melting temperature.

The welding seam may extend circumferentially along an edge of the inner layer, and more specifically may extend directly adjacent to the inner layer so as to minimize a contact area of the outer layer with the content of the bag.

A filling duct may be welded to the outer layer. In practice a filling duct may be made of a low-cost material like PE. Such a filling duct can be easily welded to an outer layer if it is also made of PE.

In a specific embodiment at least a portion of the filling duct is disposed between the outer layers at the welding seam. This means that the filling duct is integrated in the welding seam which may facilitate the manufacturing thereof. The filling duct may partly protrude in the inner side of the bag, i.e. being disposed between the inner layers beyond the welding seam.

In an alternative embodiment the filling duct is spaced from the welding seam and comprises a through-hole for communicating, in use, with the inner side of the bag through a hole in at least the inner layer. The hole in the inner layer may be made by the user by inserting a punch through the through-hole of the filling duct and punching at least the inner layer. Furthermore, prior to use the bag is sealed. The filling duct may be provided with a flange for facilitating its connection to the outer layer. The flange may be disposed at the outer side or the inner side of the outer layer. In the former case both the inner and outer layer have to be punched for creating an opening between the through-hole of the filling duct and the inner side of the bag, whereas in the latter case only the inner layer has to be punched since the filling duct passes through a hole in the outer layer. Particularly in the former case contact between the content of the bag and the flange is minimized. This means that migration of chemical compounds contained in the filling duct material to the content of the bag is minimized.

The bag wall may be provided with at least a further layer which is disposed between the inner layer and the outer layer, which further layer has a lower melting temperature than the inner layer. This provides the opportunity to weld a standard inner layer/further layer laminate, such as a PET/PE laminate, to a standard outer layer such as PE of a larger size than the inner layer/further layer laminate to create a welding portion. It appears to be easier to cut the standard inner layer/further layer laminate and weld it to the outer layer than adhering an inner layer directly to an outer layer which overlaps the inner layer, because this often results in a poor connection between the layers at the edge of the inner layer. It is also conceivable to fix a standard inner layer/further layer laminate, such as a PET/PE laminate, to a standard outer layer such as PE of a larger size than the inner layer/further layer laminate by other means than welding. Of course, the outer layer may be provided with further layers than a single layer of PE. It may also be a standard PE/PET laminate. The edge of the inner layer and the further layer at the welding seam may substantially coincide.

In an alternative embodiment of the bag at least at a location of a welding seam of the walls there is provided a layer portion next to each inner layer and connected thereto, such that the layer portions of both inner layers are positioned directly against each other, wherein said layer portions have a lower melting temperature than the inner layers and are welded directly to each other at the location of the welding seam. This means that the layer portions may be located along the edge of the layer portions of the inner layers that are positioned directly against each other.

The layer portions may be part of the outer layers. This provides the opportunity to make each layer portion and outer layer of a single sheet.

In a practical embodiment the outer layers extend beyond the connected inner layers, and the inner sides of the outer layers are welded to each other. This allows easy manufacturing since the walls of an intended bag can be positioned on each other and the layer portions directly welded to each other.

Alternatively, the walls are folded inwardly at the position of the welding seams and the outer sides of the outer layers are welded directly to each other. This allows to use walls of which the edges of the outer and inner layers coincide at the welding seam.

In another alternative embodiment the layer portions are additional layers attached to the respective inner layers at the position of the welding seam. This provides the opportunity to attach additional layers in the form of strokes to the inner layers and weld the strokes to each other. Several adhering means are possible for attaching the additional layers to the respective inner layers.

In a further alternative embodiment the layer portions are additional layers attached to the respective outer layers at the position of the welding seam. In this case the additional layers are connected to the corresponding inner layers via the corresponding outer layers. The additional layers may be formed by strokes which partly overlap the outer side of the outer layers at the position of the welding seam.

It is noted that the outer layers and additional layers may be made of the same material, for example PE, but applying different materials is also possible.

It is also noted that the inner layer may be made of an inner layer material which does not have a melting temperature but a decomposition temperature if it decomposes instead of melts at a certain temperature. This may be the case when the inner layer is made of paper or the like. In such a case the inner layer material has a decomposition temperature which is higher than the melting temperature of the material of which the outer layer, additional layer, further layer or layer portion are made. This means that if one of the latter layers are welded to each other at a welding seam at a certain temperature the inner layer will be protected against decomposition.

The invention will hereafter be elucidated with reference to the very schematic drawings showing embodiments of the invention by way of example.
Fig. 1a is a plan view of a bag in an intermediate condition during an embodiment of the manufacturing method according to the invention.
Fig. 1b is a cross-sectional view along the line Ib-Ib in Fig. 1a.
Fig. 1c is a similar view as Fig. 1b along the line Ic-Ic in Fig. 1a.
Fig. 1d is a similar view as Fig. 1c, but illustrating a next step in the manufacturing method.
Fig. 1e is a similar view as Fig. 1c, illustrating a next step after that according to Fig. 1d.
Fig. 2a and 2b are a plan view and a cross-sectional view, respectively, of a bag which is manufactured according to an alternative method, Fig. 2c is a similar view as Fig. 2b of an alternative embodiment of the bag, Fig. 2d is a similar view as Fig. 2c of still another alternative embodiment of the bag.
Fig. 3a-3e are similar views as Fig. 1a-1e, illustrating an alternative embodiment of the manufacturing method.
Fig. 4a-4c are similar views as Fig. 1a-1c, illustrating another alternative embodiment of the manufacturing method.
Fig. 5a is a plan view of another alternative embodiment of the manufacturing method, Fig. 5b is a plan view of the bag in an intermediate condition in this method, and Fig. 5c-d are cross-sectional views along the line Vcd-Vcd in Fig. 5b at different steps in the method.
Fig. 6a is a cross-sectional view of two sheets before welding and Fig. 6b is a similar view in welded condition.
Fig. 7a is a plan view of a blank for manufacturing a bag according to the invention, Fig. 7b is a similar view as Fig. 7a after folding and welding the blank and Fig. 7c is a perspective view of the resulting bag in partly unfolded condition.
Fig. 8a is a plan view of an embodiment of a manufacturing method for manufacturing blanks similar to that of Fig. 7a, Fig. 8b is a similar view as Fig. 8a of an alternative embodiment.
Fig. 9 is a cross-sectional view of an embodiment of an apparatus for manufacturing a bag according to the invention.
Figs. 10a-c are cross-sectional views of bag walls including filling ducts fixed to different bag walls, respectively.

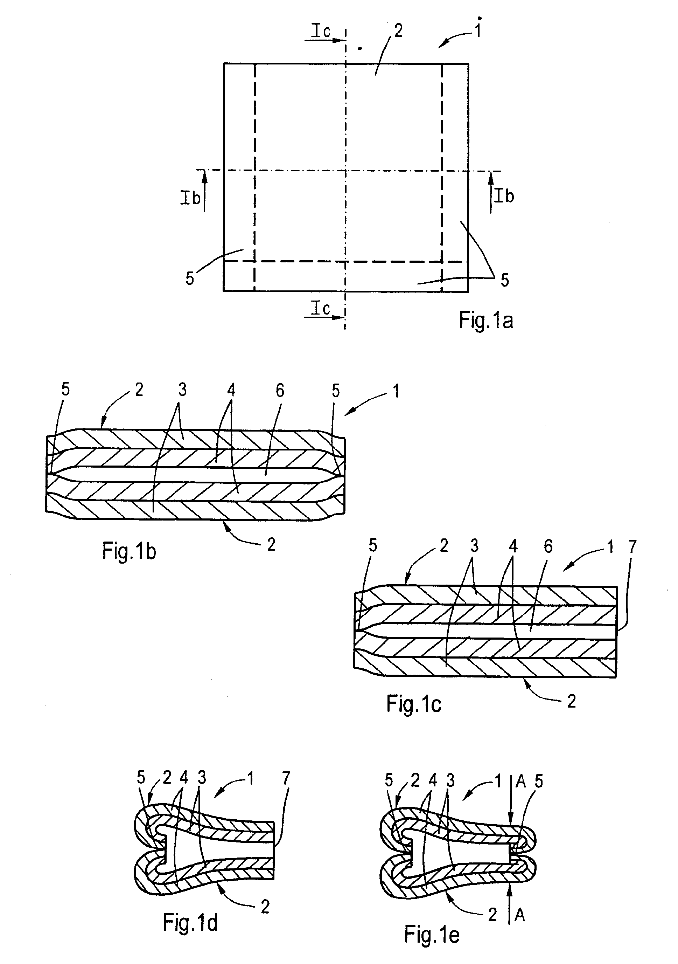

The accompanying figures illustrate several examples of a method of manufacturing a bag 1, in this case a plastic bag. The bag 1 according to the invention is not limited to a certain size and may vary from small bags to large bags for bag-in-box combinations, for example. Basically, the bag 1 is intended for use in transportation of liquids in the food industry, but alternative goals are conceivable, for example bags for containing an acid liquid or bags for solid materials or granulates. The bag 1 has a wall or sheet 2 which comprises at least an inner layer 3 made of an inner layer material and an outer layer 4 made of an outer layer material. When the bag 1 is filled with a liquid the inner layer 3 faces the liquid and is in contact with the liquid (see Fig. 1e, 2b-d, 3e, 4c, 5d, 7c, 9). The inner and outer layer materials are such that the inner and outer layer are flexible.

Nowadays plastic bags are often made of a polymer such as polyethylene (PE). Since the bag 1 according to the invention is inter alia intended for transportation of food products, PE as an inner layer 3 is undesired because it is known that PE releases chemical compounds such as plasticizers to a liquid, influencing the taste thereof, upon being in contact with the liquid. Therefore, the characteristics of the inner and outer layer material may be such that upon contact with a liquid, migration of chemical compounds contained in the inner layer material thereby influencing the human taste of the liquid is lower than that of the outer layer material. Typical chemical compounds which influence the taste of a liquid are plasticizers or other additives, but other compounds may cause similar effects. Further chemical components may be intermediate reaction products or residual monomers or fatty acids and the like.

In the bag 1 as shown in the accompanying figures the outer layer material is PE and the inner layer is polyethylene terephtalate (PET). PET is a known polymer which has a low tendency to influence the taste of a liquid upon being in contact therewith. Bottles for beverages are often made of PET. PET is also applicable as a thin layer on PE, for example, in order to create a flexible sheet containing PET. If the entire bag 1 would be made of PET the bag would be less flexible. In case of bags, in practice it is desired to weld such sheets of PE/PET to each other at increased temperature. When laying two sheets of PE/PET onto each other and the PET-sides are facing to each other, and applying the welding temperature of PET upon the outer side of the sheets, the PE layers at the outer sides of the sheets would be damaged because PE has a lower melting temperature than PET. In the other way around, when laying two sheets of PE/PET onto each other and the PE-sides are facing to each other, applying the welding temperature of PE would be sufficient to weld the sheets to each other without damaging the PET layer. However, a bag having a PE layer on its inner side may be undesired in case of containing food products as explained hereinbefore.

Fig. 1 illustrates an example of the manufacturing method of a plastic bag 1 according to the invention. Fig. 1a shows an intermediate condition of the bag 1 and Fig. 1b and 1c show cross-sectional views in longitudinal and lateral direction of the bag 1 in this condition, respectively. Although not shown in Fig. 1, the bag 1 is provided with at least an opening for filling and/or emptying the bag 1. The opening may be sealable, for example a valve. The condition as shown in Fig. 1a-1c is obtained by laying two rectangular sheets, each comprising the inner layer 3 and the outer layer 4, onto each other. In this case the inner layer material is PET and the outer layer material is PE. The outer layers of PE are facing to each other and are welded to each other along welding seams 5. A portion of the sheets is not welded, but left open forming an entrance opening 7, such that a cross-sectional shape as shown in Fig. 1c arises. Thus, the sheets 2 form a cavity 6 surrounded by welding seams 5, which cavity 6 communicates with the environment via the entrance opening 7, see Fig. 1c. In this conditions the outer layers 4 still face to the inner side or cavity 6 of the bag 1.

In a next step the thus formed bag 1 is turned inside out through the entrance opening 7 such that the bag 1 as shown in Fig. 1d is obtained. The existing welding seams 5 are maintained and the bag now comprises an inner layer 3 of PET facing to the inner side of the bag 1, and an outer layer 4 of PE facing outwardly from the bag 1.

In the next step the entrance opening 7 of the bag 1 is sealed. Since in this case the inner layers 3 are made of PET they cannot be welded at increased temperature to each other without damaging the outer layer 4 of PE, because the welding temperature of PET is higher than that of PE. Therefore, a portion of the sheets 2 around the entrance opening 7 is folded inwardly of the bag 1 such that the outer layers 4 of the sheets 2 face to each other, and then the outer layers 4 near the entrance opening 7 are welded to each other. This is shown in Fig. 1e by arrows A illustrating the location where welding bars are pressed onto the sheets 2, thus creating a welding seam 5 between the adjacent outer layers 4.

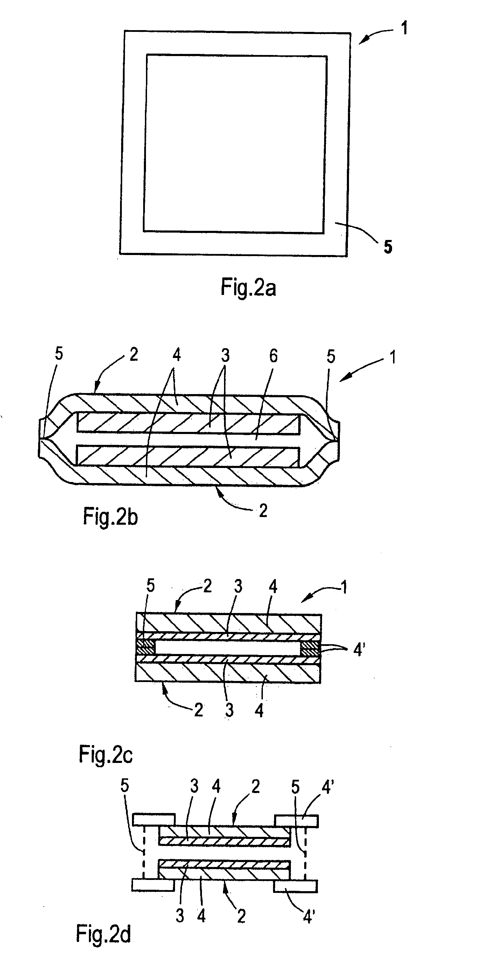

Fig. 2a-2b show an alternative embodiment of a bag 1 which is manufactured according to an alternative method. In this embodiment the bag 1 has outer layers 4 of PE and inner layers 3 of PET. As can been seen in Fig. 2a-2b each outer layer 4 has a larger surface than the inner layer 3. Each outer layer 4 extends beyond the outer edge of each inner layer 3 as seen in outward direction of the bag 1. The welding seams 5 are applied along the outer edges of the outer layers 4 in which areas the outer layers 4 of the sheets 2 face to each other without the inner layers 3 being sandwiched between the outer layers 4. Preferably, the inner layers 3 are cut such that their outer edges closely extend along the welding seams 5. However, a small distance between the outer edge of the inner layers 3 and the welding seams 5 may be acceptable since a contact surface of a portion of the outer layers 4 which is not covered by the inner layers 3 with the content of the bag 1, when filled, is relatively small. The effect of the release of chemical compounds from the outer layer 4 to a liquid in the bag 1 will be limited in this case, for example.

It may be clear that the method as illustrated in Fig. 2a-2b may be modified in that the sheets 2 are not two separated sheets 2 laid onto each other, but that it is a single sheet which is folded, thus laying two sheet portions onto each other. In this case, one of the welding seams 5 is replaced by a fold.

Fig. 2c shows another alternative embodiment of the bag 1. Each inner layer 3 is provided with a layer portion or an additional layer 4' at a location where a welding seam 5 between the bag walls 2 is intended. Each additional layer 4' has a lower melting temperature than the inner layers 3. In this case the welding seams 5 are located between the additional layers 4' and particularly at the whole area thereof. In practice each additional layer 4' may be made of PE. In a final state of this embodiment of the bag 1 its content will be in contact with the additional layers 4', but the contact surfaces will be relatively small. In practice, the contact surfaces are very small. In the resulting bag 1 the welding seam 5 is located next to the layer portions of the inner layers 3 that are positioned directly against each other. It is noted that the embodiment of Fig. 2c is comparable to that of Fig. 1. Fig. 1d-e show that the walls 2 are folded inwardly and the outer sides of the outer layers 2 are welded to each other at the welding seam 5, whereas Fig. 2c shows that there is no direct connection between the additional layers 4' and the respective outer layers 4.

Fig. 2d shows still another alternative embodiment of the bag 1. Each outer layer 4 is provided with a layer portion or an additional layer 4' at a location where a welding seam 5 between the bag walls 2 is intended. The additional layers 4' have a lower melting temperature than the inner layers 3. In this case the welding seams 5 are located between the additional layers 4' next to the inner layer 3. In practice the additional layers 4' may be made of PE. The additional layers 4' are attached to the outer sides of the outer layers 4 next to the position of the welding seam 5. In a final condition of the bag wall, each additional layer 4' and outer layer 4 in fact form a new integrated outer layer 4, 4' wherein the inner layer 3 is away at a location of the welding seam 5 of the walls 2 and the integrated outer layers 4, 4' are welded directly to each other at the location of the welding seam 5. In practice the outer layers 4 and the additional layers 4' may be made of different materials as long as their melting temperature is lower than that of the inner layers 3. The additional layers 4' may be strokes which are slightly wider than a welding seam 5 and overlap the outer layers 4. After welding the stroke to an opposite additional layer 4', the stroke will be welded to the corresponding outer layer 4, as well. Nevertheless, the additional layers 4' may also be adhered to the layer 4 by other means than welding.

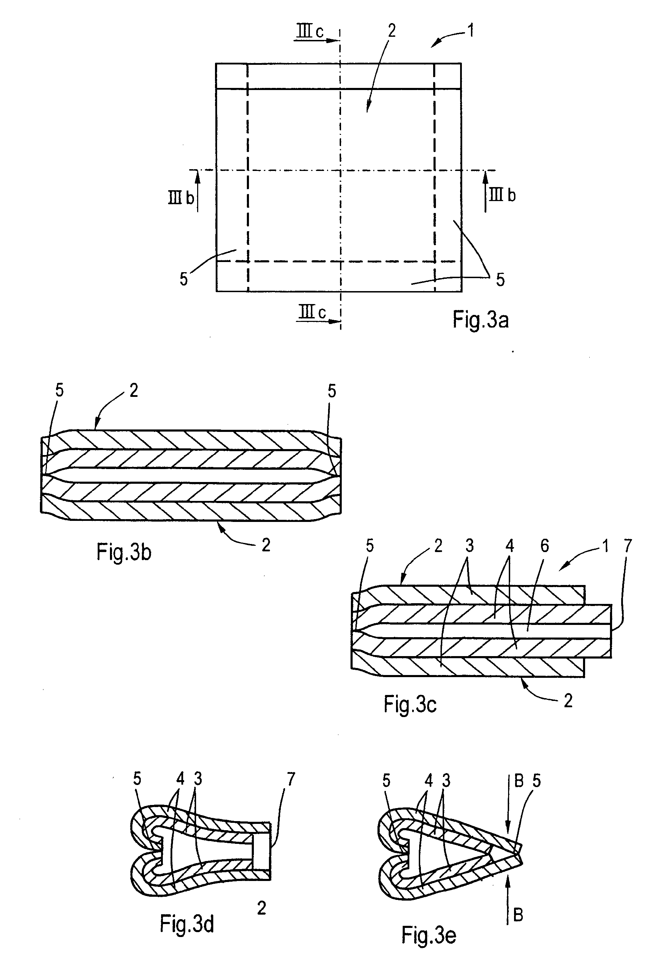

Fig. 3a-3e illustrate another alternative method of manufacturing the bag 1 according to the invention. In this embodiment, the sheets 2 are welded along three adjacent welding seams 5 leaving open a portion, comparable to the method as illustrated in Fig. 1a-1e. In this embodiment the inner layers 3 of the sheets 2 at the entrance opening 7 are manufactured such that the outer layers 4 extend beyond outer edges of the inner layers 3 as seen in outward direction of the sheets 2. This condition is shown in Fig. 3c. Then, the thus formed bag 1 is turned inside out through the entrance opening 7, leading to the condition as shown in Fig. 3d. Now, at the entrance opening 7 the outer layers 4 extend beyond the outer edges of the inner layers 3 as seen outwardly from the bag 1. Then, the portions of the outer layer 4 extending beyond the edges of the inner layer 3 are welded to each other at an edge area as indicated by arrows B in Fig. 3e, resulting in the welding seam 5.

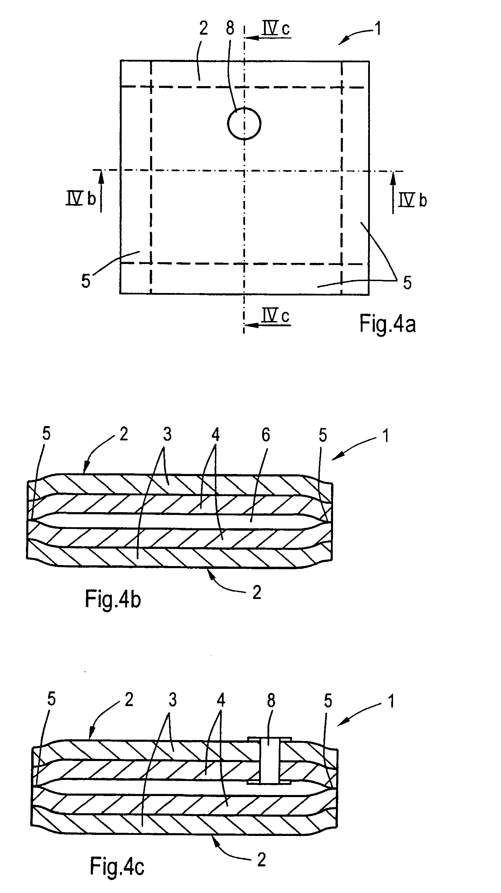

In Fig. 4a-4c a bag 1 provided with a filling duct 8 is shown. The sheets 2 are welded along four welding seams 5 forming a continuous circumferential welding seam. In order to create a bag 1 having an inner layer 3 facing to the inner side of the bag 1 the sheets 2 are drawn through the filling duct 8 (not shown).

It is noted that the bag 1 of all embodiments as described above may comprise at least an opening for filling or emptying the bag 1. A filling duct 8 may be of a material which has a relative high tendency to migrate chemical compounds to a liquid contained in the bag 1, like PE as explained hereinbefore. Therefore, the filling duct 8 may be fixed to the outer layer 4 only, for example, such that a contact surface of the filling duct with the liquid in the bag 1 is minimized. Alternatively, if the filling duct includes a flange which is adhered to the inner layer 3 and faces to the inner side of the bag, for example, the flange can be covered by a sheet having a low tendency to migrate chemical compounds to a liquid upon contact therewith.

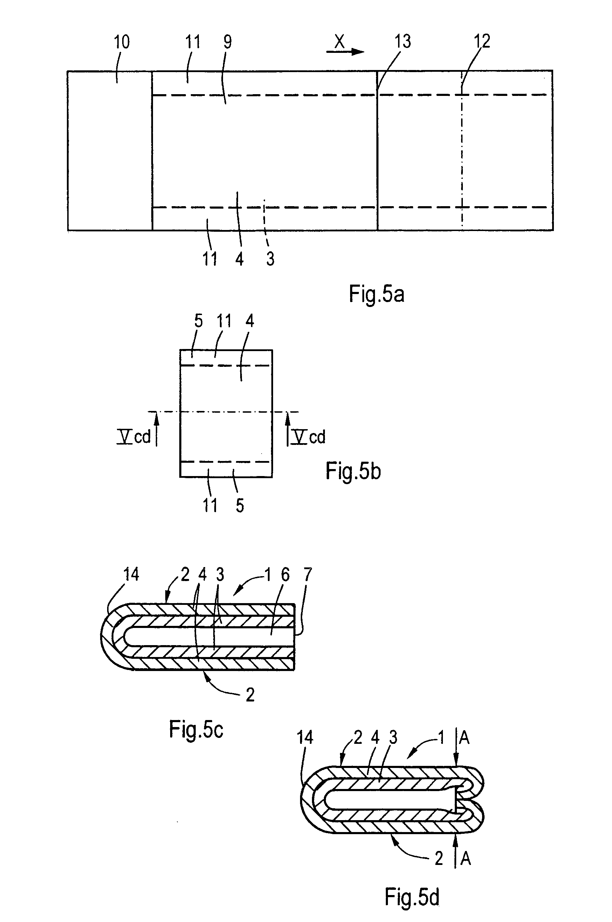

Fig. 5 shows an alternative method of manufacturing a bag wherein the sheets 2 are supplied and laid onto each other by supplying a main sheet 9. The main sheet 9 is supplied from a roll 10 and is a continuous sheet in a transfer direction X. The main sheet 9 has longitudinal welding portions 11 which are spaced from each other in a direction perpendicular to the transfer direction X. In this case the welding portions 11 are located at opposite edge portions in lateral direction of the main sheet 9. At the welding portions 11 the inner layer 3 is away, comparable to the condition as shown in Fig. 3d. Therefore, the welding portions 11 are ready for being welded when laid onto each other.

Furthermore, in this method the main sheet 9 is folded along a folding line 12 and cut along a cutting line 13, see Fig. 5a. The inner layer 3 of the main sheet 1 including the welding portions 11 is laid onto itself such that the outer layer 4 at the welding portions 11 face to itself, see Fig. 5b. The outer layers 4 at the welding portions 11 are welded to each other, thus forming a cavity 6 surrounded by sheets 2 comprising welded welding portions or welding seams 5 and a fold 14. This condition is illustrated in Fig. 5c and the thus formed bag 1 has still an entrance opening 7 to the cavity 6. The entrance opening 7 is sealed according to the method as illustrated in Fig. 1 and described hereinbefore. A cross section of the bag 1 after manufacturing is illustrated in Fig. 5d. Thus, in this embodiment the main sheet 9 at the beginning of the manufacturing method becomes the opposed sheets 2 of the bag 1 at the end of the manufacturing method. In this method the bag 1 does not need to be turned inside out.

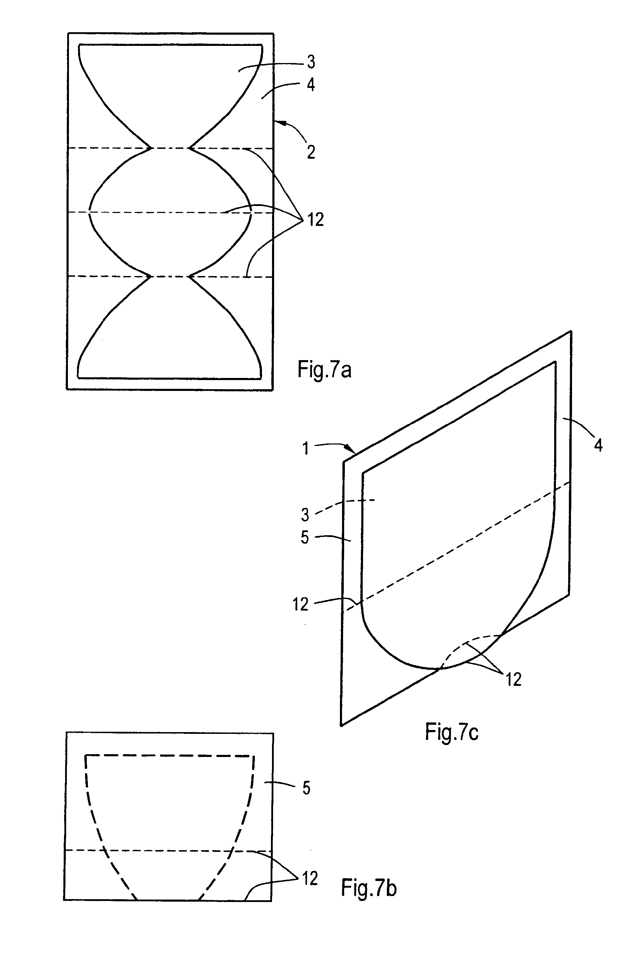

Figs. 7a-7c illustrate an alternative method of manufacturing a pouch or bag 1. Fig. 7a shows a plan view of a blank of the intended bag 1. The blank is made of a sheet 2 which comprises an inner layer 3 and an outer layer 4. Similar to other embodiments as described hereinbefore the inner layer 3 is made of PET and the outer layer 4 is made of PE, but alternative materials are possible. Fig. 7a shows that along the outer edge of the blank the inner layer 3 is away. Fig. 7a further shows folding lines 12 along which the blank is folded. The circumferential shape of the inner layer 3 of the blank and the positions of the folding lines 12 are selected such that the inner layer 3 and the outer layer 4 fit onto themselves, respectively, after folding the sheet 2 onto itself, see Fig. 7b. Of course, numerous alternative circumferential shapes of the inner layer 3 and outer layer 4 are conceivable.

After folding the blank the parts of the outer layer 4 at the locations where the inner layer 3 is away are welded to each other. This can be performed by welding bars, plates, rollers or the like. It is noted that a welding device may even overlap the inner layer 3 during welding because this will not affect the inner layer 3 due to the relatively high melting temperature thereof. In such a case the welding seam 5 extends from the edge of the bag 1 inwardly up to the outer edge of the inner layer 3. Fig. 7c shows the resulting bag 1 which is able to stand upright on its bottom side due to its shape in unfolded condition, in which condition two folding lines 12 at the bottom of the bag 1 are spaced from each other. It is noted that in the bottom corners of the embodiment of the bag 1 according to Fig. 7c four parallel portions of the outer layer 4 are joined whereas above the folding line 12 extending between a bottom and a top of the bag 1 only two portions of the outer layer 4 are joined at the welding seams 5.

The embodiment of the bag 1 of Fig. 7c can also be provided with a filling duct (not shown) for filling and/or emptying the bag 1. In practice such a filling duct may be made of PE, which means that it can be joined easily to an outer layer 4 which is made of PE, as well, for example by heat welding. A possible manufacturing method comprises the step of inserting at least a portion of the filling duct into the bag 1 between the opposite outer layers 4 which are welded to each other at a distance from the intended position of the filling duct, before the final welding seam 5 which is adjacent to the filling duct is applied. The duct may be inserted into the bag 1 such that it partly protrudes outwardly from the bag 1 and partly is enveloped by a portion of the outer layers 4. On the other hand, the duct may protrude in the inner side of the bag 1 between the inner layers 3 beyond the welding seam 5.

In case of an embodiment of a bag 1 as shown in Figs. 2c-d the filling duct can be welded between the additional layers 4' at the welding seam 5.

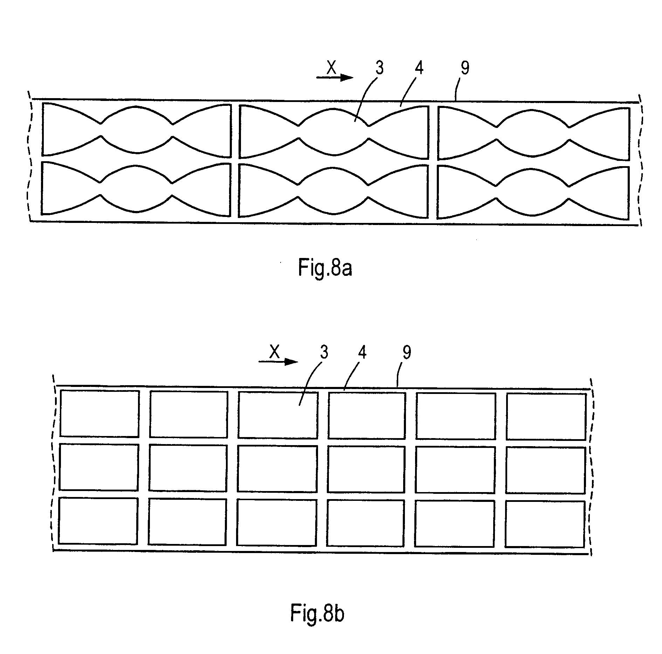

Fig. 8a shows an embodiment of the manufacturing method for manufacturing blanks similar to that of Fig. 7a. The main sheet 9 comprises a continuous outer layer 4 on which portions of the inner layer 3 are applied at a certain distance from each other in a longitudinal direction X of the main sheet 9 and transversely thereto. In a next manufacturing step the main sheet 9 can be cut into separate pieces resulting in blanks as shown in Fig. 7a. It is also possible to fold and weld the main sheet 9 partly before cutting it into separate pieces. The application of the portions of the inner layer 3 onto the outer layer 4 can be performed by adhesive means, static charge, (partly) heat welding, laminating, ultrasonic welding or the like. The portions of the inner layer 3 can be applied onto the outer layer 4 by an apparatus comparable to a labeling device, for example. The portions of the inner layer 3 may be connected in longitudinal directions through small connecting portions. In certain cases it is not necessary and even not preferred to join the inner and outer layers 3, 4 entirely; in such a case spot welding is an option. Nevertheless it is preferred to have a sealed connection between the layers 3, 4 at the outer edge of the inner layer 3 so as to avoid penetration of the content of the bag 1 between the inner and outer layers 3, 4.

Alternatively, blanks of bags 1 may be made by applying additional layers 4' as shown in Figs. 2c-d. In those cases the main sheet 9 according to Fig. 8a may comprise a continuous inner layer 3 and a continuous outer layer 4 wherein portions of the additional layer 4' having a lower melting temperature than the inner layer 3, for example PE, are applied to the inner layer 3 or outer layer 4 of the main sheet 9, respectively. The additional layers 4' may be relatively narrow strokes having a similar width or being slightly wider than the intended welding seal 5. A main sheet 9 for making an embodiment of a wall of a bag 1 as shown in Fig. 2c has a similar plan view as Fig. 8a but the reference numeral 4 being replaced by 4'. Fig. 8b shows an alternative embodiment of the manufacturing method for manufacturing blanks. These blanks may be typically applicable for manufacturing bags for bag-in-box applications.

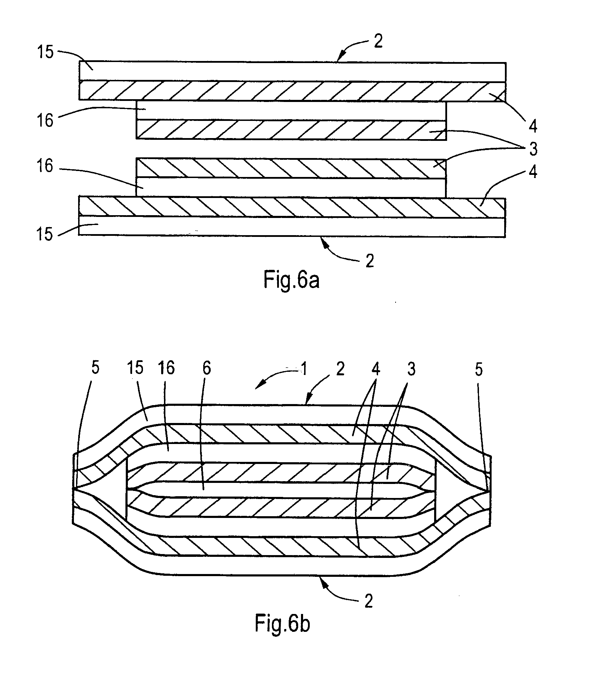

The walls or sheets 2 may have more layers than the inner and outer layer 3, 4. This is illustrated in the embodiment of Fig. 6. In Fig. 6a two sheets 2 are shown in a condition before welding. This embodiment is comparable to that shown in Fig. 2b, but in this case each sheet 2 comprises a first and second further layer 15 and 16. The first further layer 15 is made of PET for example, in order to obtain a bag 1 having an outer side of PET, and the second further layer 16 is made of PE for example. Such a sheet 2 on itself may be made of laminating two PE/PET layers onto each other, for example. If the outer layer 4 is made of PE and the second further layer 16 is made of PE the two PE/PET layers can be easily welded to each other. Fig. 6b shows the condition in which the sheets 2 are welded to each other by a method according to the invention, comparable to that of Fig. 2b. The inner layers 3 of the sheets 2 are laid onto each other. The inner layer 3 and outer layer 4 of each sheet 2 are prepared such that the inner layer 3 is away at a location where a welding seam 5 of the sheets 2 is intended. In this case the outer layer 4 of each sheet 2 extends beyond an outer edge of the inner layer 3 of that sheet as seen in outward direction along the sheet 2. In other words, in this case the surface of the outer layers 4 are larger than those of the inner layers 3. The sheets 2 are welded to each other at locations where the outer layers 4 extend beyond the inner layers 3, as illustrated by welding seams 5 in Fig. 6b. As a consequence, a bag 1 is obtained which has walls 2 which each comprise an inner layer 3 facing the inner side or cavity 6 of the bag 1 and an outer layer 4 which is disposed at a side of the inner layer 3 opposite to the inner side of the bag 1, whereas each wall 2 further comprises a first further layer 15 and a second further layer 16.

Welding a laminate of an inner layer 3 of PET and a second further layer 16 of PE to a laminate of an outer layer 4 of PE and a first further layer 15 of PET as shown in Fig. 6a has a further advantage. If each wall of the bag 1 only comprises an inner layer 3 and an outer layer 4 wherein the inner layer 3 is away at the welding seam 5, the adhesion between the inner and outer layers 3, 4 near the welding seam 5 has a tendency to be poor in case of applying an adhesive between the layers 3, 4. In case of welding the multi-layer laminates as illustrated in the embodiment of Fig. 6a to each other to form a sheet 2 the adhesion between the outer layer 4 and the second further layer 16 near the welding seam 5 significantly improves.

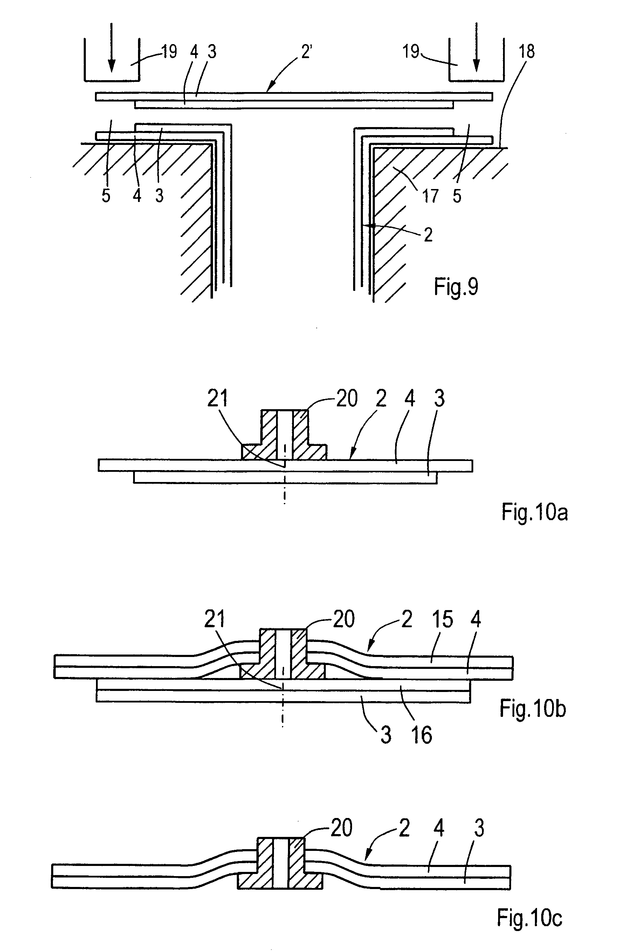

Fig. 9 shows a cross-sectional view of a part of an embodiment of an apparatus for manufacturing a bag 1 according to an alternative method. The apparatus is provided with a mould 17 having a hole in which a portion of the sheet 2 is inserted. An other portion of the sheet 2 located around an opening of the sheet 2 projects out of the hole and lays on an outer surface 18 of the mould 17. The sheet 2 is placed on the mould 17 such that the outer layer 4 thereof extends beyond the inner layer 3 as seen in outward direction of the hole in the mould 17 and the outer layer 3 faces from the mould 17. A further sheet 2' of which the outer layer 4 extends beyond the inner layer 3 as seen in outward direction of the further sheet 2' is placed on the portion of the sheet 2 which lays on the outer surface 18 of the mould 17. A welding bar 19 is placed onto the further sheet 2' at the location of the intended welding seams 5. The welding bar 19 may be circular in case of a circular circumferential shape of the welding seam 5. Nevertheless, alternative shapes are conceivable. The portions of the sheet 2 and the further sheet 2' where the inner layers 3 are away will be joined, i.e. at those locations the outer layers 4 are welded directly to each other.

Fig. 10a illustrates a way of fixing a filling duct 20 to the wall or sheet 2 of the bag 1 at a distance of a welding seam 5 between walls 2 of the bag 1. In this case the filling duct 20 is provided with a flange which is welded to the outer side of the outer layer 4 of a bag wall 2. Since the outer layer 4 has a lower melting point than the inner layer 3 a welding bar may be placed onto the inner layer 3 and pressed in a direction from the inner layer 3 to the filling duct 20 so as to join the filling duct 20 and the outer layer 4 without damaging the inner layer 3. Fig. 10b shows an alternative embodiment of a bag wall 2, which is similar to that of the embodiment as shown in Fig. 6a. In this case one side of the flange of the filling duct 20 is welded to the inner side of the outer layer 4 whereas its opposite side is welded to the outer side of the second further layer 16. In practice the filling duct 20 as well as the outer layer 4 and the second further layer 16 may be made of PE which provides an appropriate adhering strength between the filling duct 20 and those layers 4, 16.

After manufacturing the bag 1 including the filling duct 20 the bag 1 may be still sealed at the filling duct 20 with respect to the environment. Upon use the bag 1 can be opened at the filling duct 20 by punching the sheet 2 at the end of a through-hole of the filling duct 20, as indicated by broken lines 21 in Figs. 10a and 10b. An advantage of fixing the filling duct 20 to the bag wall 2 as shown in Figs. 10a and 10b is that punching of the sheet 2 in a direction from the filling duct 20 to the inner layer 3 is relatively easy since the inner layer 3 is less stretchable than the outer layer 4 or the second further layer 16 in practice. This means that a portion of the sheet 2 located at the end of the through-hole of the filling duct 20 will not be stretched to a great extent before a hole is formed in the sheet 2. Alternatively, the flange of the filling duct 20 may also be disposed between the inner and outer layers 3, 4 in the embodiment as shown in Fig. 10a and welded to the inner side of the outer layer 4, while the remainder of the filling duct 20 is passed through a hole in the outer layer 4.

Fig. 10c shows still another alternative bag wall 2 including a filling duct 20. In this case the filling duct 20 is made of a material which can be attached relatively easy to the inner layer 3. The filling duct 20 and the inner layer 3 are both made of materials which have higher melting temperatures than the outer layer 4. For example, the outer layer is made of PE whereas the inner layer 3 as well as the filling duct 20 are made of PET. This means that the filling duct 20 can be welded are adhered in another way to the inner layer 3. It is also possible to place the flange of the filling duct 20 between the inner and outer layer 3, 4 and weld the filling duct 20 to the inner layer 3. In these cases the welding bar may approach to the sheet 2 at the side of the inner layer 2, which prevents the outer layer 4 from being destroyed due to the relatively high welding temperature.

From the foregoing, it will be clear that the invention provides a method of manufacturing a bag by applying welding technique, wherein the bag has an inner layer of higher melting temperature than the outer layer.

The invention is not limited to the embodiments shown in the drawings and described hereinbefore, which may be varied in different manners within the scope of the claims and their technical equivalents. For example, the shape of the bag may be different from a rectangular shape. The walls or sheets may be a combination of a polymer and another material such as a vaporized metal, for example. PE may be replaced by other polymers giving a suitable strength and flexibility, such as PVC, PP. PET may be replaced by materials like PA, OPA, PC, PP, POM, or the like. It is for example possible to have combinations of inner layer and outer layer like PET and PE, PET and PP, or PP and PE, respectively. In these combinations the inner layer has a higher melting temperature than the outer layer. The advantages of PE and PET are the low prices thereof. The inner layer 3 and the outer layer 4 may be fixed to each other over the entire surfaces thereof, but it is also possible that they are separate layers or part of separate layers, which is typically advantageous in case of relatively big bags.

## Claims

1. Method of manufacturing a bag (1) by supplying at least two sheets (2), each sheet comprising at least an inner layer (3) made of an inner layer material and an outer layer (4) made of an outer layer material, the inner layer material having a higher melting temperature than the outer layer material, wherein the outer layers (4) of the sheets (2) are laid onto each other and welded to each other along a welding seam (5) such that an almost entirely sealed cavity (6) between the sheets arises, but leaving open an entrance opening (7) to the cavity (6), after which the thus formed bag (1) is turned inside out through the entrance opening (7), and then a portion of the sheets (2) around the entrance opening (7) is folded inwardly of the thus formed bag (1) such that the outer layers (4) thereof face to each other and are then welded to each other such that the bag obtains a sealed cavity between the sheets.

2. Method of manufacturing a bag (1) by supplying at least two sheets (2), each comprising at least an inner layer (3) made of an inner layer material and an outer layer (4) made of an outer layer material, the inner layer material having a higher melting temperature than the outer layer material, wherein the outer layers (4) of the sheets (2) are laid onto each other and welded to each other along a welding seam (5) such that an almost entirely sealed cavity (6) between the sheets (2) arises, but leaving open an entrance opening (7) to the cavity (6), and wherein the inner and outer layers (3, 4) of the sheets (2) at the open portion (7) are manufactured such that the outer layers extend beyond outer edges of the respective inner layers (4) as seen in outward direction of the sheets (2), wherein the thus formed bag (1) is turned inside out through the entrance opening (7), and then said portions of the outer layer (4) extending beyond the inner layer (3) are welded to each other.

3. Method of manufacturing a bag (1) by supplying at least two sheets (2), each sheet (2) comprising at least an inner layer (3) made of an inner layer material and an
outer layer (4) made of an outer layer material, the inner layer material having a higher melting temperature than the outer layer material, wherein the inner layers (3) of the sheets (2) are laid onto each other, and wherein the inner layer (3) and outer layer (4) are prepared such that the inner layer (3) is away at a location where a welding seam (5) of the sheets is intended, and the outer layers (4) are welded to each other at the location where a welding seam (5) is intended.

4. Method according to claim 3, wherein the welding seam (5) is circumferentially shaped such that a sealed cavity (6) arises between said sheets (2).

5. Method according to claim 3, wherein the sheets are supplied and laid onto each other by supplying a main sheet (9) being continuous in a transfer direction (X) and having longitudinal welding portions (11) spaced from each other in a direction perpendicular to the transfer direction (X), in which welding portions (11) the inner layer (3) is away, and folding and cutting the main sheet (9) such that the inner layer (3) of the main sheet (9) and the welding portions (11) are laid onto themselves, and the outer layer (4) at the welding portions (11) face to each other, and the outer layer (4) at the welding portions (11) are welded to each other, thus forming a cavity (6) surrounded by sheets (2) comprising welded welding portions (11) and a fold (14), the thus formed bag (1) leaving open an entrance opening (7) to the cavity (6), and then a portion of the sheets (2) around the entrance opening (7) is folded inwardly of the thus formed bag (1) such that the outer layers (4) thereof face to each other and are then welded to each other such that the bag (1) obtains a sealed cavity (6) between the sheets (2).

6. A bag (1) having a wall (2) which comprises at least an inner layer (3) facing the inner side of the bag and an outer layer (4) being disposed at a side of the inner layer (3) opposite to the inner side of the bag (1), wherein the inner layer (3) has a higher melting temperature than the outer layer (4)
, wherein the inner layer (3) and outer layer (4) are dimensioned such that the inner layer (3) is away at a location of a welding seam (5) of the walls (2), so that the outer layers (4) are welded directly to each other at the location of the welding seam (5).

7. A bag according to claim 6, wherein the welding seam (5) extends circumferentially along an edge of the inner layer (3).

8. A bag according to claim 7, wherein the welding seam extends directly adjacent the inner layer (3).

9. A bag (1) having a wall (2) which
comprises at least an inner layer (3) facing the inner side of the bag and an outer layer (4) being disposed at a side of
the inner layer (3) opposite to the inner side of the bag (1), wherein the inner layer (3) has a higher melting temperature than the outer layer (4),
wherein at least at a location of a welding seam (5) of the walls (2) there is provided a layer portion (4, 4') next to each inner layer (3) and connected thereto, such that the layer portions of both inner layers (3) are positioned directly against each other, said layer portions (4') having a lower melting temperature than the inner layers (3) and are welded directly to each other at the location of the welding seam (5).

10. A bag according to claim 9, wherein the layer portions (4) are part of the outer layers (4).

11. A bag according to claim 10, wherein the outer layers (4') extend beyond the connected inner layers (3), and the inner sides of the outer layers (4) are welded to each other.

12. A bag according to claim 9 or 10,
wherein the walls (2) are folded inwardly at the position of the welding seams (5) and the outer sides of the outer layers (4) are welded directly to each other.

13. A bag according to claim 9, wherein the layer portions are additional layers (4') attached to the respective inner layers (3) at the position of the welding seam (5).

14. A bag according to claim 9, wherein the layer portions are additional layers (4') attached to the respective outer layers (4) at the position of the welding seam (5).

## Patentansprüche

1. Verfahren zur Herstellung eines Beutels (1) durch Bereitstellen mindestens zweier Folien (2) mit jeweils mindestens einer aus einem Innenschichtmaterial hergestellten Innenschicht (3) und einer aus einem Außenschichtmaterial hergestellten Außenschicht (4), wobei das Innenschichtmaterial eine höhere Schmelztemperatur hat als das Außenschichtmaterial, wobei die Außenschichten (4) der Folien (2) aufeinander gelegt und entlang einer Schweißnaht (5) miteinander verschweißt werden, so dass zwischen den Folien ein fast vollständig verschweißter Hohlraum (6) entsteht, aber eine Zugangsöffnung (7) zu dem Hohlraum (6) offen bleibt, wobei der so gebildete Beutel (1) durch die Zugangsöffnung hindurch von innen nach außen gestülpt wird und dann ein um die Zugangsöffnung (7) herum befindlicher Abschnitt der Folien (2) ins Innere des so gebildeten Beutels (1) gefaltet wird, so dass die Außenschichten (4) sich gegenüberliegen und dann miteinander verschweißt werden, so dass der Beutel einen versiegelten Hohlraum zwischen den Folien bekommt.

2. Verfahren zur Herstellung eines Beutels (1) durch Bereitstellen mindestens zweier Folien (2) mit jeweils mindestens einer aus einem Innenschichtmaterial hergestellten Innenschicht (3) und einer aus einem Außenschichtmaterial hergestellten Außenschicht (4), wobei das Innenschichtmaterial eine höhere Schmelztemperatur hat als das Außenschichtmaterial, wobei die Außenschichten (4) der Folien (2) aufeinander gelegt und entlang einer Schweißnaht (5) miteinander verschweißt werden, so dass zwischen den Folien ein fast vollständig verschweißter Hohlraum (6) entsteht, aber eine Zugangsöffnung (7) zu dem Hohlraum (6) offen bleibt, und wobei die Innen- und Außenschichten (3,4) der Folien (2) an dem offenen Abschnitt (7) so gearbeitet sind, dass sich - gesehen in Auswärtsrichtung der Folien (2) - die Außenschichten (4) über die Außenkanten der jeweiligen Innenschichten (3) hinaus erstrecken, wobei der so gebildete Beutel (1) durch die Zugangsöffnung (7) hindurch von innen nach außen gestülpt wird und dann die Abschnitte der Außenschicht (4), die sich über die Innenschicht (3) hinaus erstrecken, miteinander verschweißt werden.

3. Verfahren zur Herstellung eines Beutels (1) durch Bereitstellen mindestens zweier Folien (2) mit jeweils mindestens einer aus einem Innenschichtmaterial hergestellten Innenschicht (3) und einer aus einem Außenschichtmaterial hergestellten Außenschicht (4), wobei das Innenschichtmaterial eine höhere Schmelztemperatur hat als das Außenschichtmaterial, wobei die Innenschichten (3) der Folien (2) aufeinander gelegt werden und wobei die Innenschicht (3) und die Außenschicht (4) so gearbeitet sind, dass an einem Ort, wo eine Schweißnaht (5) der Folien vorgesehen ist, die Innenschicht (3) nicht vorhanden ist, und die Außenschichten (4) an dem Ort, wo eine Schweißnaht (5) vorgesehen ist, miteinander verschweißt werden.

4. Verfahren nach Anspruch 3, wobei die Schweißnaht (5) Umfangsform hat, so dass zwischen den Folien (2) ein versiegelter Hohlraum (6) entsteht.

5. Verfahren nach Anspruch 3, wobei die Folien bereitgestellt und aufeinandergelegt werden, indem eine in Vorschubrichtung (X) kontinuierliche Hauptfolie (9) zugeführt wird, die sich längs erstreckende Schweißabschnitte (11) hat, die in einer zur Vorschubrichtung (X) senkrechten Richtung voneinander beabstandet sind, wobei in den Schweißabschnitten (11) die Innenschicht (3) nicht vorhanden ist, und indem die Hauptfolie (9) gefaltet und geschnitten wird, derart, dass die Innenschicht (3) der Hauptfolie (9) auf sich selbst gelegt ist und die Schweißabschnitte (11) aufeinander gelegt sind und die Außenschicht (4) an den Schweißabschnitten (11) sich selbst gegenüberliegt und die Außenschicht (4) an den Schweißabschnitten (11) verschweißt wird, wodurch ein von Folien (2) umgebener Hohlraum (6) entsteht, der geschweißte Schweißabschnitte (11) und eine Falte (14) aufweist, wobei der so gebildete Beutel (1) eine Zugangsöffnung (7) zu dem Hohlraum (6) offen lässt, und dann ein um die Zugangsöffnung (7) herum befindlicher Abschnitt der Folien (2) ins Innere des so gebildeten Beutels (1) gefaltet wird, so dass die Außenschichten (4) sich gegenüberliegen und dann miteinander verschweißt werden, so dass der Beutel (1) einen versiegelten Hohlraum (6) zwischen den Folien (2) bekommt.

6. Beutel (1) mit einer Wand (2), die mindestens eine dem Beutelinneren zugewandte Innenschicht (3) und eine Außenschicht (4) aufweist, die an der anderen, nicht dem Beutelinneren zugewandten Seite der Innenschicht (3) angeordnet ist, wobei die Innenschicht (3) eine höhere Schmelztemperatur hat als die Außenschicht (4), wobei die Innenschicht (3) und die Außenschicht (4) so bemessen sind, dass an einem Ort einer Schweißnaht (5) der Wände (2) die Innenschicht (3) nicht vorhanden ist, so dass an dem Ort der Schweißnaht (5) die Außenschichten (4) direkt miteinander verschweißt sind.

7. Beutel nach Anspruch 6, wobei sich die Schweißnaht (5) am Umfang entlang einer Kante der Innenschicht (3) erstreckt.

8. Beutel nach Anspruch 7, wobei sich die Schweißnaht (5) direkt angrenzend an die Innenschicht (3) erstreckt.

9. Beutel (1) mit einer Wand (2), die mindestens eine dem Beutelinneren zugewandte Innenschicht (3) und eine Außenschicht (4) aufweist, die an der anderen, nicht dem Beutelinneren zugewandten Seite der Innenschicht (3) angeordnet ist, wobei die Innenschicht (3) eine höhere Schmelztemperatur hat als die Außenschicht (4), wobei mindestens an einem Ort einer Schweißnaht (5) der Wände (2) ein Schichtabschnitt (4,4') neben der Innenschicht (3) bereitgestellt und mit ihr verbunden ist, so dass die Schichtabschnitte beider Innenschichten (3) direkt gegeneinander angeordnet sind, wobei die Schichtabschnitte (4') eine niedrigere Schmelztemperatur als die Innenschichten (3) haben und an dem Ort der Schweißnaht (5) direkt miteinander verschweißt sind.

10. Beutel nach Anspruch 9, wobei die Schichtabschnitte (4) Teil der Außenschichten (4) sind.

11. Beutel nach Anspruch 10, wobei sich die Außenschichten (4') über die miteinander verbundenen Innenschichten (3) hinaus erstrecken und die Innenseiten der Außenschichten (4) miteinander verschweißt sind.

12. Beutel nach Anspruch 9 oder 10, wobei die Wände (2) am Ort der Schweißnähte (5) nach innen gefaltet sind und die Außenseiten der Außenschichten (4) direkt miteinander verschweißt sind.

13. Beutel nach Anspruch 9, wobei die Schichtabschnitte zusätzliche Schichten (4') sind, die am Ort der Schweißnaht (5) an den jeweiligen Innenschichten (3) angefügt sind.

14. Beutel nach Anspruch 9, wobei die Schichtabschnitte zusätzliche Schichten (4') sind, die am Ort der Schweißnaht (5) an den jeweiligen Außenschichten (4) angefügt sind.

## Revendications

1. Procédé de fabrication d'un sac (1) en fournissant au moins deux feuilles (2), chaque feuille comprenant au moins une couche interne (3) réalisée dans un matériau de couche interne et une couche externe (4) réalisée dans un matériau de couche externe, le matériau de couche interne ayant une température de fusion supérieure à celle du matériau de couche externe, dans lequel les couches externes (4) des feuilles (2) sont posées l'une sur l'autre et soudées entre elles le long d'un cordon de soudure (5) de telle sorte qu'une cavité presque entièrement étanche (6) se forme entre les feuilles, mais en laissant ouverte une ouverture d'entrée (7) vers la cavité (6), après quoi le sac ainsi formé (1) est retourné à travers l'ouverture d'entrée (7), et une partie des feuilles (2) située autour de l'ouverture d'entrée (7) est ensuite pliée vers l'intérieur du sac ainsi formé (1) de telle sorte que les couches externes (4) de celui-ci se font face et sont ensuite soudées entre elles afin que le sac présente une cavité étanche entre les feuilles.

2. Procédé de fabrication d'un sac (1) en fournissant au moins deux feuilles (2), chacune comprenant au moins une couche interne (3) réalisée dans un matériau de couche interne et une couche externe (4) réalisée dans un matériau de couche externe, le matériau de couche interne ayant une température de fusion supérieure à celle du matériau de couche externe, dans lequel les couches externes (4) des feuilles (2) sont posées l'une sur l'autre et soudées entre elles le long d'un cordon de soudure (5) de telle sorte qu'une cavité presque entièrement étanche (6) se forme entre les feuilles (2), mais en laissant ouverte une ouverture d'entrée (7) vers la cavité (6), et dans lequel les couches internes et externes (3, 4) des feuilles (2) dans la partie ouverte (7) sont fabriquées de telle sorte que les couches externes s'étendent au-delà de bords externes des couches internes respectives (4) quand on regarde vers l'extérieur des feuilles (2), dans lequel le sac ainsi formé (1) est retourné à travers l'ouverture d'entrée (7), et lesdites parties de la couche externe (4) s'étendant au-delà de la couche interne (3) sont ensuite soudées entre elles.

3. Procédé de fabrication d'un sac (1) en fournissant au moins deux feuilles (2), chaque feuille (2) comprenant au moins une couche interne (3) réalisée dans un matériau de couche interne et une couche externe (4) réalisée dans un matériau de couche externe, le matériau de couche interne ayant une température de fusion supérieure à celle du matériau de couche externe, dans lequel les couches internes (3) des feuilles (2) sont posées l'une sur l'autre, et dans lequel la couche interne (3) et la couche externe (4) sont préparées de telle sorte que la couche interne (3) est à l'écart à un emplacement où est prévu un cordon de soudure (5) des feuilles, et les couches externes (4) sont soudées entre elles à l'emplacement où est prévu un cordon de soudure (5).

4. Procédé selon la revendication 3, dans lequel le cordon de soudure (5) est formé circonférentiellement de telle sorte qu'une cavité étanche (6) se forme entre lesdites feuilles (2).

5. Procédé selon la revendication 3, dans lequel les feuilles sont fournies et posées l'une sur l'autre par fourniture d'une feuille principale (9) qui est continue dans une direction de transfert (X) et qui comporte des parties à souder longitudinales (11) espacées l'une de l'autre dans une direction perpendiculaire à la direction de transfert (X), la couche interne (3) étant à l'écart dans lesdites parties à souder (11), et par pliage et découpage de la feuille principale (9) de telle sorte que la couche interne (3) de la feuille principale (9) et les parties à souder (11) sont posées sur elles-mêmes, et la couche externe (4) se fait face dans les parties à souder (11), et la couche externe (4) est soudée sur elle dans les parties à souder (11), formant ainsi une cavité (6) entourée par des feuilles (2) comprenant des parties à souder soudées (11) et un pli (14), le sac ainsi formé (1) laissant ouverte une ouverture d'entrée (7) vers la cavité (6), et une partie des feuilles (2) située autour de l'ouverture d'entrée (7) est ensuite pliée vers l'intérieur du sac ainsi formé (1) de telle sorte que les couches externes (4) de celui-ci se font face et sont ensuite soudées entre elles afin que le sac (1) présente une cavité étanche (6) entre les feuilles (2).

6. Sac (1) comportant une paroi (2) qui comprend au moins une couche interne (3) faisant face au côté interne du sac et une couche externe (4) disposée du côté de la couche interne (3) opposé au côté interne du sac (1), dans lequel la couche interne (3) a une température de fusion supérieure à celle de la couche externe (4), dans lequel la couche interne (3) et la couche externe (4) ont des dimensions telles que la couche interne (3) est à l'écart à un emplacement d'un cordon de soudure (5) des parois (2), de telle sorte que les couches externes (4) sont soudées directement entre elles à l'emplacement du cordon de soudure (5).

7. Sac selon la revendication 6, dans lequel le cordon de soudure (5) s'étend circonférentiellement le long d'un bord de la couche interne (3).

8. Sac selon la revendication 7, dans lequel le cordon de soudure s'étend de façon directement adjacente à la couche interne (3).

9. Sac (1) comportant une paroi (2) qui comprend au moins une couche interne (3) faisant face au côté interne du sac et une couche externe (4) disposée du côté de la couche interne (3) opposé au côté interne du sac (1), dans lequel la couche interne (3) a une température de fusion supérieure à celle de la couche externe (4), dans lequel au moins à un emplacement d'un cordon de soudure (5) des parois (2) il est prévu une partie de couche (4, 4') à côté de chaque couche interne (3) et reliée à celle-ci, de telle sorte que les parties de couches des deux couches internes (3) sont placées directement l'une contre l'autre, lesdites parties de couches (4') ayant une température de fusion inférieure à celle des couches internes (3) et sont soudées directement entre elles à l'emplacement du cordon de soudure (5).

10. Sac selon la revendication 9, dans lequel les parties de couches (4) font partie des couches externes (4).

11. Sac selon la revendication 10, dans lequel les couches externes (4') s'étendent au-delà des couches internes (3) reliées, et les côtés internes des couches externes (4) sont soudés entre eux.

12. Sac selon la revendication 9 ou 10, dans lequel les parois (2) sont pliées vers l'intérieur à l'endroit des cordons de soudure (5) et les côtés externes des couches externes (4) sont soudés directement entre eux.

13. Sac selon la revendication 9, dans lequel les parties de couches sont des couches supplémentaires (4') fixées aux couches internes respectives (3) à l'endroit du cordon de soudure (5).

14. Sac selon la revendication 9, dans lequel les parties de couches sont des couches supplémentaires (4') fixées aux couches externes respectives (4) à l'endroit du cordon de soudure (5).
